# EUROPÄISCHE PATENTANMELDUNG

(11) **EP 2 339 248 A2**
(43) Veröffentlichungstag der Anmeldung: **29.06.2011**
(21) Anmeldenummer: 10195715.7
(22) Anmeldetag: 17.12.2010
(51) Int. Cl.: F24D 13/02

(54) **Elektrische Heizvorrichtung mit einem Heizdraht**

(30) Priorität: 18.12.2009 DE 102009059206
(71) Anmelder: Domoteck, Ltd., 24959 Tefen (IL)
(72) Erfinder: Klein, Dan, 34984, Haifa (IL)
(74) Vertreter: Katscher Habermann Patentanwälte

(57) **Zusammenfassung**

Eine elektrische Heizvorrichtung mit einem Heizdraht (2), der mit einer elektrischen Energieversorgung verbindbar ist, weist mindestens einen zweiten Heizdraht (2) auf, der entlang des ersten Heizdrahtes (2) angeordnet und elektrisch isoliert mit dem ersten Heizdraht (2) verbunden ist. Die mindestens zwei Heizdrähte (2) sind unabhängig voneinander mit einem Heizstrom bestrombar. Die mindestens zwei Heizdrähte (2) weisen einen gleichen Heizwiderstand oder unterschiedliche Heizwiderstände auf. Die mindestens zwei Heizdrähte (2) sind mit mindestens einem streifenförmigen Flächengebilde aus einem wärmeleitenden Material wärmeübertragend verbunden. Die mindestens zwei Heizdrähte (2) sind in oder auf einem bandförmigen Verlegeelement angeordnet. Der Abstand der benachbarten Heizdrähte (2) beträgt weniger als 50 mm, vorzugsweise weniger als 10 mm. Die Breite des streifenförmigen Flächengebildes bzw. die Breite des Verlegeelements beträgt zwischen 10 mm und 50 mm beträgt. Die mindestens zwei Heizdrähte (2) weisen eine Länge von mehr als 1 m und von weniger als 50 m aufweisen.

## Beschreibung

Die Erfindung betrifft eine elektrische Heizvorrichtung mit einem Heizdraht, der mit einer elektrischen Energieversorgung verbindbar ist.

Aus der Praxis sind verschiedene elektrische Heizvorrichtungen bekannt, die für eine Verwendung als Fußbodenheizung geeignet sind. Derartige Heizvorrichtungen weisen üblicherweise einen Heizdraht mit einem elektrischen Widerstand auf, der einen Teil der durch ihn hindurchfließenden elektrischen Energie in Wärme umwandelt und abgibt. Um eine möglichst gleichmäßige Aufheizung einer zu beheizenden Fläche zu ermöglichen, wird der Heizdraht üblicherweise mäanderförmig auf der zu beheizenden Fläche angeordnet.

Aus der Praxis sind im Wesentlichen flächige Trägergebilde mit gitterförmigen oder noppenartigen Strukturen bekannt, die ein Verlegen der Heizdrähte erleichtern. Es ist ebenfalls aus der Praxis bekannt, einen Heizdraht mäanderförmig oder spiralförmig in oder auf einer Heizmatte festzulegen, die anschließend auf der zu beheizenden Fläche ausgelegt werden kann. Derartige Heizvorrichtungen können beispielsweise als Fußbodenheizung oder Wandheizung in Gebäuden verwendet werden. Die elektrische Heizvorrichtung wird dabei üblicherweise unterhalb eines Fußbodenbelags wie beispielsweise Fliesen oder Teppichboden verlegt. Des Weiteren können derartige elektrische Heizvorrichtungen auch zum Enteisen von im Freien befindlichen Rohren oder Flächen verwendet werden.

In den meisten Fällen ist es dabei zweckmäßig, dass die von der elektrischen Heizvorrichtung abgegebene Wärme bzw. Wärmeleistung gesteuert oder in Abhängigkeit von den Umgebungsbedingungen oder der erreichten Aufwärmung der zu beheizenden Fläche geregelt werden kann. Bei elektrischen Fußbodenheizungen ist zu diesem Zweck regelmäßig ein Thermostat bzw. ein Temperaturfühler vorgesehen, der die tatsächliche Erwärmung messen und mit einem vorgegebenen Sollwert vergleichen kann.

Die von der Heizvorrichtung abgegebene Wärmeleistung kann in einfacher Weise dadurch reguliert werden, dass der Heizdraht in zeitlichen Intervallen bestromt wird. Je länger der Heizdraht bestromt wird und je kürzer die Intervalle sind, in denen der Heizdraht keine Wärme erzeugt und abgibt, umso größer ist die über einen vorgegebenen Zeitraum gemittelte Heizleistung und Wärmeabgabe.

Es ist aus der Praxis ebenfalls bekannt, dass der Stromfluss durch den Heizdraht veränderbar ist und in Abhängigkeit von der gewünschten Heizleistung vorgegeben werden kann. In diesem Fall muss der von der elektrischen Energieversorgung bereitgestellte Stromfluss veränderbar sein. Dies führt zu einem erheblichen konstruktiven Aufwand und einer oftmals unvermeidbaren elektrischen Verlustleistung, die nicht zur Erwärmung des Heizdrahts verwendet werden kann.

Die alternierende Bestromung des Heizdrahts mit einem unveränderbar vorgegebenen Stromfluss kann dagegen kostengünstig realisiert werden. Allerdings kann die Wärmeabgabe der elektrischen Heizvorrichtung ausschließlich über die Häufigkeit und Dauer der Heizperioden reguliert werden. Um eine vorgegebene Wärmeabgabe zu erreichen und über einen längeren Zeitraum aufrechtzuerhalten, müssen die Heizintervalle beispielsweise mit einem Thermostat vorgegeben werden. Dabei ist es jedoch unvermeidbar, dass der Heizdraht zeitweise nicht bestromt wird und eine merkliche Abkühlung der zu beheizenden Fläche erfolgt, während in einem anschließenden Heizintervall die tatsächliche Wärmeerzeugung zu einem Temperaturanstieg über den Sollwert führt, da anderenfalls eine zuverlässige Temperaturregelung kaum möglich ist oder einen unverhältnismäßig hohen Kostenaufwand erfordert.

Es wird deshalb als eine Aufgabe der vorliegenden Erfindung angesehen, eine elektrische Heizvorrichtung der eingangs genannten Gattung so auszugestalten, dass mit einfachen Mitteln die von der elektrischen Heizvorrichtung abgebbare Wärmeleistung veränderbar ist.

Diese Aufgabe wird erfindungsgemäß dadurch gelöst, dass mindestens ein zweiter Heizdraht entlang des ersten Heizdrahtes angeordnet und elektrisch isoliert mit dem ersten Heizdraht verbunden ist. Die mindestens zwei Heizdrähte können einzeln oder zusammen betrieben und zum Aufheizen der Umgebung verwendet werden. Die abgebbare Wärmeenergie kann durch eine Auswahl des während des Betriebs bestromten Heizdrahtes oder durch eine gleichzeitige Bestromung der mindestens zwei Heizdrähte verändert werden. Die maximal abgebbare Wärmemenge kann durch die Anzahl der miteinander kombinierten Heizdrähte vorgegeben werden.

Vorzugsweise ist vorgesehen, dass die mindestens zwei Heizdrähte unabhängig voneinander mit einem Heizstrom bestrombar sind. Um ausgehend von einem niedrigen Temperaturwert möglichst rasch einen höheren vorgegebenen Temperaturwert zu erreichen, können die mindestens zwei Heizdrähte bzw. alle Heizdrähte der elektrischen Heizvorrichtung gleichzeitig bestromt werden. Sobald die angestrebte Temperatur erreicht ist, kann die Anzahl der bestromten Heizdrähte reduziert werden, um den erreichten Temperaturwert zu halten und die durch die bestromten Heizdrähte erzeugte Wärmeleistung auf das erforderliche Maß zu beschränken. Sollte es erforderlich werden, so kann in zeitlichen Intervallen ein weiterer Heizdraht bestromt werden, um ein Absinken der mit der elektrischen Heizvorrichtung erzeugten Temperatur unter einen vorgebbaren Schwellenwert zu vermeiden. Die vorgegebene Temperatur kann dabei wesentlich gleichmäßiger über einen langen Zeitraum aufrechterhalten werden, als das mit einem einzelnen Heizdraht möglich wäre, da durch die Bestromung einzelner Heizdrähte bzw. einer geeigneten Anzahl von Heizdrähten eine stufenweise Anpassung der mit der elektrischen Heizvorrichtung erzeugten Wärmeenergie möglich ist und durch die Zuschaltung eines weiteren Heizdrahtes geringfügige Änderungen rasch ausgeglichen werden können.

Um eine besonders einfache und kostengünstige elektrische Energieversorgung und deren Ansteuerung zu ermöglichen ist vorgesehen, dass die mindestens zwei Heizdrähte einen gleichen Heizwiderstand aufweisen.

Es ist ebenfalls denkbar, dass die mindestens zwei Heizdrähte unterschiedliche Heizwiderstände aufweisen. Durch eine geeignete Kombination mehrerer Heizdrähte mit jeweils unterschiedlichem Heizwiderstand können auch bei kontinuierlicher Bestromung einer geeigneten Auswahl von Heizdrähten unterschiedliche Wärmeleistungen der elektrischen Heizvorrichtung erzeugt werden. Eine ständige Nachregelung durch alternierendes Bestromen bzw. Abschalten eines einzelnen Heizdrahtes kann auf diese Weise überflüssig werden oder zumindest die zeitlichen Abstände für einen Wechsel des Betriebszustandes erheblich vergrößert werden, um eine weitestgehend gleichbleibende Wärmemenge abgeben und eine angestrebte Temperatur halten zu können.

Gemäß einer vorteilhaften Ausgestaltung des Erfindungsgedankens ist vorgesehen, dass die mindestens zwei Heizdrähte jeweils eine elektrisch isolierende Umhüllung aufweisen, die mit einem Elektrizität und Wärme leitenden Material umgeben ist. Jeder Heizdraht kann beispielsweise mit einem Kunststoffüberzug versehen sein, der wiederum mit einem Kupferkabel umwickelt oder umflochten ist. Das Kupferkabel bewirkt eine Verbesserung der Wärmeleitung mit dem Ziel einer gleichmäßigen Wärmeverteilung an einer Oberfläche der Heizvorrichtung. Zudem wird durch das Kupferkabel in einfacher Weise eine Erdung der bestrombaren Heizdrähte gewährleistet.

Um die Wärmeabgabe der mindestens zwei Heizdrähte zu verbessern ist vorgesehen, dass die mindestens zwei Heizdrähte mit mindestens einem streifenförmigen Flächengebilde aus einem wärmeleitenden Material wärmeübertragend verbunden sind. Das streifenförmige Flächengebilde kann beispielsweise ein Aluminiumfolienstreifen sein, auf dem die mindestens zwei Heizdrähte befestigt sind. Die von einem Heizdraht erzeugte Wärme wird zumindest teilweise auf den Aluminiumfolienstreifen übertragen und im Wesentlichen gleichmäßig von der Oberfläche des Aluminiumfolienstreifens abgestrahlt bzw. an die Umgebung übertragen. Im Gegensatz zu einem einzelnen linienförmigen Heizdraht wird auf diese Weise die von dem mindestens einen bestromten Heizdraht erzeugte Wärmeenergie auf ein streifenförmiges Flächengebilde übertragen und von diesem flächig abgegeben.

Gemäß einer vorteilhaften Ausgestaltung des Erfindungsgedankens ist vorgesehen, dass die mindestens zwei Heizdrähte in oder auf einem bandförmigen Verlegeelement angeordnet sind. Das Verlegeelement kann beispielsweise ein Kunststoffband aus einem flexiblen Kunststoffmaterial sein. Die mindestens zwei Heizdrähte können auf dem Kunststoffband aufgeklebt oder in das Kunststoffmaterial eingebettet sein. Das bandförmige Verlegeelement dient einer einfachen und zuverlässigen Verlegung der Heizdrähte auf einem Untergrund einer zu beheizenden Fläche. Gleichzeitig bewirkt das bandförmige Verlegeelement einen Schutz der Heizdrähte vor mechanischer Beanspruchung.

Die Schutzwirkung eines bandförmigen Verlegeelements ist besonders hoch, wenn die mindestens zwei Heizdrähte in dem bandförmigen Verlegeelement eingebettet sind und vollständig von dem bandförmigen Verlegeelement umgeben werden. Dies kann dadurch erreicht werden, dass die mindestens zwei Heizdrähte während eines Extrudiervorgangs in das Innere eines extrudierten Kunststoffbandes eingeführt wird und auf diese Weise in dem Kunststoffband eingebettet werden.

Um ein Verlegen der elektrischen Heizvorrichtung zu erleichtern ist vorgesehen, dass der Abstand der benachbarten Heizdrähte weniger als 50 mm, vorzugsweise weniger als 10 mm beträgt.

Aus demselben Grund ist vorgesehen, dass die Breite des streifenförmigen Flächengebildes bzw. die Breite des Verlegeelements zwischen 10 mm und 50 mm beträgt. Ein schmales Band bzw. ein derart schmales bandförmiges Flächengebilde kann vor Ort rasch und ohne übermäßige mechanische Beanspruchung auch mit engen Krümmungsradien bzw. gegebenenfalls in zulässiger Weise geknickt oder gefaltet verlegt werden. Gleichzeitig ist der Abstand einzelner Heizdrähte der elektrischen Heizvorrichtung ausreichend gering, um unabhängig von dem Betriebszustand einzelner Heizdrähte eine im Wesentlichen gleichmäßige Wärmeabgabe über die gesamte Breite der elektrischen Heizvorrichtung mit mehreren beabstandet zueinander angeordneten Heizdrähten hinweg zu ermöglichen.

Durch die Auswahl eines geeigneten Materials des Heizdrahts sowie der umgebenden Isolierung können die mindestens zwei Heizdrähte eine für die meisten Anwendungsfällen ausreichend große Länge aufweisen. Im Hinblick auf die üblicherweise in der Praxis relevanten Anforderungen hat es sich als vorteilhaft herausgestellt, wenn die mindestens zwei Heizdrähte eine Länge von 1 m und weniger als 50 m aufweisen. Sollen große Flächen wie beispielsweise Fußballfelder oder dergleichen mit einer derartigen elektrischen Heizvorrichtung beheizt werden, so können die Heizdrähte auch eine größere Länge aufweisen.

Nachfolgend werden Ausführungsbeispiele des Erfindungsgedankens näher erläutert, die in der Zeichnung dargestellt sind. Es zeigt:
Fig. 1 eine schematische Darstellung einer elektrischen Heizvorrichtung mit zwei Heizdrähten, die an eine elektrische Energieversorgung angeschlossen sind,
Fig. 2 eine Schnittansicht durch die in Fig. 1 dargestellte elektrische Heizvorrichtung längs der Linie II-II in Fig. 1,
Fig. 3 eine Schnittansicht durch eine abweichend ausgestaltete elektrische Heizvorrichtung und
Fig. 4 eine Schnittansicht durch eine wiederum abgewandelte elektrische Heizvorrichtung.

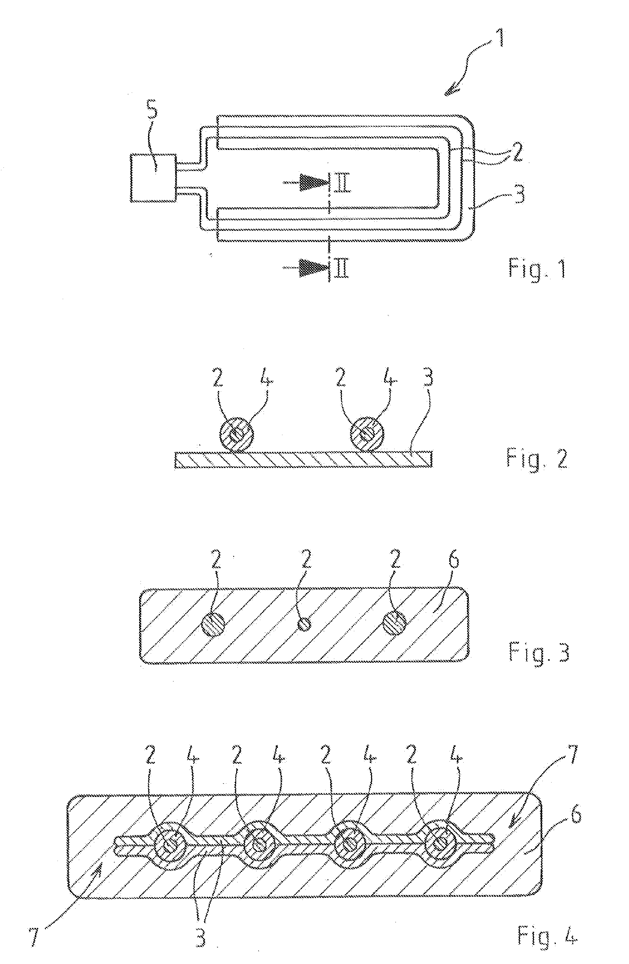

Die in den Fig. 1 und 2 dargestellte elektrische Heizvorrichtung 1 weist zwei Heizdrähte 2 auf, die auf einem Streifen aus Aluminiumfolie 3 parallel zueinander angeordnet sind. Die elektrischen Heizdrähte 2 sind von einer Isolierung 4 aus einem geeigneten Isolierungsmaterial wie beispielsweise einem elektrisch isolierenden Kunststoff umgeben. Die Heizdrähte 2 bzw. das die Heizdrähte 2 jeweils umgebende Isolierungsmaterial 4 sind auf dem Aluminiumfolienstreifen 3 verklebt und dadurch auf dem Aluminiumfolienstreifen 3 fixiert.

Die beiden Heizdrähte 2 sind unabhängig voneinander mit einer elektrischen Energieversorgung 5 verbunden. Durch eine geeignete Ansteuerung der elektrischen Energieversorgung 5 ist es möglich, wahlweise einen der beiden elektrischen Heizdrähte 2 oder beide elektrische Heizdrähte 2 gleichzeitig zu bestromen. In einem stromdurchflossenen Zustand erzeugen die beiden Heizdrähte 2 auf Grund des jeweiligen Heizwiderstandes Wärme, die an die Umgebung abgegeben wird und die angestrebte Erwärmung der Umgebung bewirkt. Auf Grund der guten Wärmeleiteigenschaften der Aluminiumfolie 3 wird ein großer Anteil der von einem elektrischen Heizdraht 2 während des Betriebs erzeugten Wärme gleichmäßig über die gesamte Aluminiumfolie 3 verteilt und von dieser flächig abgegeben. Dies führt zu einer gleichmäßigeren räumlichen Erwärmung der Umgebung im Vergleich zu der im Wesentlichen linienförmigen Wärmeabgabe eines einzelnen elektrischen Heizdrahtes 2.

Die Aluminiumfolie 3 mit den darauf angeordneten Heizdrähten 2 kann nahezu beliebig auf einer vorgegebenen Fläche angeordnet werden. Insbesondere ist es möglich, die Aluminiumfolie 3 mit den darauf festgelegten Heizdrähten 2 beispielsweise mäanderförmig oder spiralförmig auf einer vorgegebenen Fläche zu verlegen und dadurch eine im Wesentlichen gleichmäßige Erwärmung dieser Fläche während des Betriebs der elektrischen Heizvorrichtung 1 zu ermöglichen.

Abweichend von dem in den Fig. 1 und 2 dargestellten Ausführungsbeispiel können die Heizdrähte 2 zusammen mit der Aluminiumfolie 3 oder einem anderen Streifen aus wärmeleitendem Material in eine Umhüllung aus Kunststoff eingebettet sein. Die Aluminiumfolie 3 und die Heizdrähte 2 können zu diesem Zweck während des Extrudierens eines Kunststoffbandes in dasselbe eingebettet, bzw. eingelagert werden.

Bei dem in Fig. 3 schematisch dargestellten Ausführungsbeispiel sind drei elektrische Heizdrähte 2 in einem bandförmigen Verlegeelement 6 aus flexiblem Kunststoffmaterial angeordnet. Das flexible Kunststoffmaterial des bandförmigen Verlegeelements 6 umgibt die einzelnen Heizdrähte 2 vollständig und bewirkt gleichzeitig einen Schutz vor mechanischer Beanspruchung sowie eine elektrische Isolierung der einzelnen Heizdrähte 2. Die elektrischen Heizdrähe 2 weisen eine unterschiedlichen Querschnittsfläche und unterschiedliche Heizwiderstände auf.

Bei dem In Fig. 4 schematisch dargestellten Ausführungsbeispiel sind vier Heizdrähte 2 beabstandet zueinander in einem bandförmigen Verlegeelement 6 mit einer näherungsweise quaderförmigen Querschnittsfläche angeordnet. Die einzelnen Heizdrähte 2 sind jeweils mit einem Isoliermaterial 4 ummantelt. Die einzelnen Heizdrähte 2 sind auf beiden Seiten jeweils von einer Aluminiumfolie 3 umgeben, die sich mit Ausnahme von Randbereichen 7 quer durch das gesamte bandförmige Verlegeelement 6 erstrecken. Die beiden Aluminiumfolien 3 bewirken eine im Wesentlichen gleichmäßige Verteilung der von den einzelnen Heizdrähten 2 abgegebenen Wärme über die gesamte Erstreckung der beiden Aluminiumfolien 3 innerhalb des bandförmigen Verlegeelements 6.

Die elektrischen Heizdrähte 2 können einen gleichen Heizwiderstand oder jeweils unterschiedliche Heizwiderstände aufweisen. Zusätzlich kann jeder elektrische Heizdraht 2 zum Schutz vor mechanischer Beanspruchung nicht nur von einem elektrisch isolierenden Material 4, sondern auch von einem beispielsweise reißfesten oder Drahtbruch verhindernden Schutzmaterial umgeben sein.

## Patentansprüche

1. Elektrische Heizvorrichtung (1) mit einem Heizdraht (2), der mit einer elektrischen Energieversorgung (5) verbindbar ist, **dadurch gekennzeichnet, dass** mindestens ein zweiter Heizdraht (2) entlang des ersten Heizdrahtes (2) angeordnet und elektrisch isoliert mit dem ersten Heizdraht (2) verbunden ist.

2. Elektrische Heizvorrichtung nach Anspruch 1, **dadurch gekennzeichnet, dass** die mindestens zwei Heizdrähte (2) unabhängig voneinander mit einem Heizstrom bestrombar sind.

3. Elektrische Heizvorrichtung nach Anspruch 1 oder Anspruch 2, **dadurch gekennzeichnet, dass** die mindestens zwei Heizdrähte (2) einen gleichen Heizwiderstand aufweisen.

4. Elektrische Heizvorrichtung nach Anspruch 1 oder Anspruch 2, **dadurch gekennzeichnet, dass** die mindestens zwei Heizdrähte (2) unterschiedliche Heizwiderstände aufweisen.

5. Elektrische Heizvorrichtung nach einem der vorangehenden Ansprüche, **dadurch gekennzeichnet, dass** die mindestens zwei Heizdrähte (2) jeweils eine elektrisch isolierende Umhüllung aufweisen, die mit einem Elektrizität und Wärme leitenden Material umgeben ist.

6. Elektrische Heizvorrichtung nach einem der vorangehenden Ansprüche, **dadurch gekennzeichnet, dass** die mindestens zwei Heizdrähte (2) mit mindestens einem streifenförmigen Flächengebilde aus einem wärmeleitenden Material wärmeübertragend verbunden sind.

7. Elektrische Heizvorrichtung nach einem der vorangehenden Ansprüche, **dadurch gekennzeichnet, dass** die mindestens zwei Heizdrähte (2) in oder auf einem bandförmigen Verlegeelement (6) angeordnet sind.

8. Elektrische Heizvorrichtung nach einem der vorangehenden Ansprüche, **dadurch gekennzeichnet, dass** der Abstand der benachbarten Heizdrähte (2) weniger als 50 mm, vorzugsweise weniger als 10 mm beträgt.

9. Elektrische Heizvorrichtung nach Anspruch 6, 7 oder 8, **dadurch gekennzeichnet, dass** die Breite des streifenförmigen Flächengebildes bzw. die Breite des Verlegeelements (6) zwischen 10 mm und 50 mm beträgt.

10. Elektrische Heizvorrichtung nach einem der vorangehenden Ansprüche, **dadurch gekennzeichnet, dass** die mindestens zwei Heizdrähte (2) eine Länge von mehr als 1 m und von weniger als 50 m aufweisen.
